# FASCICULE DE BREVET EUROPEEN

(11) **EP 2 435 216 B1**
(45) Date de publication et mention de la délivrance du brevet: **29.03.2017**
(21) Numéro de dépôt: 10723567.3
(22) Date de dépôt: 25.05.2010
(51) Int. Cl.: B25J 9/16, G05B 19/409

(54) **SYSTEME ET PROCEDE POUR EDITER ET COMMANDER DES COMPORTEMENTS D'UN ROBOT MOBILE**
SYSTEM UND VERFAHREN ZUR BEARBEITUNG UND STEUERUNG DES VERHALTENS EINES BEWEGLICHEN ROBOTERS
SYSTEM AND METHOD FOR EDITING AND CONTROLLING THE BEHAVIOUR OF A MOVABLE ROBOT

(30) Priorité: 26.05.2009 FR 0953434
(43) Date de publication de la demande: 04.04.2012
(73) Titulaire: Aldebaran Robotics, 75014 Paris (FR)
(72) Inventeur: MONCEAUX, Jérôme, F-75013 Paris (FR); MAISONNIER, Bruno, 75005 Paris (FR)
(74) Mandataire: Nguyen Van Yen, Christian
(86) Numéro de dépôt international: PCT/EP2010/057111
(87) Numéro de publication internationale: WO 2010/136427

(56) Documents cités:
- FR-A- 2 918 477
- JP-A- 2002 120 174
- US-A1- 2007 150 102
- US-B2- 6 470 235
- US-B2- 6 718 231
- GEORGIOS PIERRIS ET AL: "An interactive tool for designing complex robot motion patterns" ROBOTICS AND AUTOMATION, 2009. ICRA '09. IEEE INTERNATIONAL CONFERENCE ON, IEEE, PISCATAWAY, NJ, USA, 12 mai 2009 (2009-05-12), pages 4013-4018, XP031510111 ISBN: 978-1-4244-2788-8

## Description

La présente invention appartient au domaine des systèmes de programmation des robots. Plus précisément, elle s'applique à l'édition et la commande des comportements et mouvements de robots qui se déplacent sur ou utilisent des membres articulés, notamment de forme humaine ou animale. Un robot peut être qualifié d'humanoïde à partir du moment où il possède certains attributs de l'apparence humaine : une tête, un tronc, deux bras, deux mains, deux jambes, deux pieds... Un robot humanoïde peut cependant être plus ou moins évolué. Ses membres peuvent avoir un nombre plus ou moins important d'articulations. Il peut gérer lui-même son équilibre en statique et en dynamique et marcher sur deux membres, éventuellement en trois dimensions. Il peut capter des signaux de l'environnement (« entendre », « voir », « toucher », « sentir »...) et réagir selon des comportements plus ou moins sophistiqués, ainsi qu'interagir avec d'autres robots ou des humains, soit par la parole soit par le geste. Pour tirer le meilleur parti de ces possibilités, il reste nécessaire de fournir à l'unité informatique de commande du robot des commandes des dits comportements. Certains robots peuvent rechercher de manière autonome des commandes nécessaires pour exécuter des comportements correspondant à leur profil d'utilisation. Il reste cependant nécessaire qu'un utilisateur puisse intervenir pour créer de nouveaux comportements et mouvements. Une première manière de programmer les commandes nécessaires est de les faire se dérouler selon une séquence temporelle prédéterminée. Cette logique de programmation présente l'avantage que le comportement du robot est prédictible dans le temps : la suite de comportements a un début et une fin qui interviennent à des dates prédictibles. Voir par exemple le procédé d'édition et de programmation temporelle des comportements d'un robot divulgué par le brevet US 6,718,231. Cependant, cette logique rencontre sa limite dans le fait que les interactions du robot avec son environnement sont à la fois inévitables (rencontre d'obstacles sur le chemin) et souhaitables (réactions du robot aux sollicitations de l'environnement ou de son utilisateur), ce qui interrompt le cours de la séquence de comportements préprogrammés. C'est pourquoi une autre logique de programmation, de type évènementiel, inspirée de la théorie des automates a été utilisée pour les robots humanoïdes comme pour les robots industriels : dans cette logique de programmation, des liens relient des comportements, le deuxième dans une chaîne étant dépendant des sorties du premier. Cette logique permet de gérer les interactions avec l'environnement. Voir par exemple le procédé d'édition et de programmation évènementielle d'un robot divulgué par le brevet US 6,470,235. Cette logique présente cependant l'inconvénient d'interrompre une séquence de comportements pré programmée tant que l'évènement attendu ne s'est pas produit. Un exemple simplifié permettra de comprendre facilement cette difficulté : l'utilisateur souhaite que le robot se rende d'une première position à une deuxième position qu'il doit atteindre à un instant déterminé. En chemin, il peut avoir à effectuer des actions qui dépendent d'interactions avec l'environnement (dire « bonjour » à un autre robot qu'il rencontre, ramasser un objet, etc...). Une programmation purement évènementielle, non contrainte par le temps, ne peut résoudre ce problème.
Un procédé qui juxtapose les deux logiques de programmation évènementielle et temporelle est divulgué par la demande de brevet japonais JP2002/120174. Dans ledit procédé, cependant, le programmeur doit cependant intervenir dans l'un des deux blocs de programme pour les rendre compatibles. Ce procédé ne résout donc pas le problème consistant à rendre les deux logiques de programmation évènementielle et temporelle compatibles sans intervention du programmeur. De même, la demande de brevet US2007/150102 divulgue des logiques de programmation évènementielle et temporelle qui ne sont pas combinées au sein d'une même Boîte de commande.

La présente invention résout ce problème en prévoyant un système et un procédé d'édition et de programmation des comportements d'un robot qui combine les logiques de programmation temporelle et évènementielle sans intervention du programmeur sur chaque évènement.
A cet effet, la présente invention divulgue un procédé d'édition d'un programme de commande selon la revendication 1..

L'invention divulgue également un programme d'ordinateur pour mettre en oeuvre le procédé d'édition selon la revendication 11, ainsi qu'un programme de commande selon la revendication 12 et un robot selon la revendication 13.

L'invention procure également l'avantage de permettre une édition conviviale des commandes à exécuter par le robot qui permet à la fois l'utilisation de Boîtes de commande de comportements et de mouvements pré programmées. Les Boîtes sont organisées en une structure hiérarchique qui permet de décomposer les comportements complexes en comportements élémentaires. Les comportements élémentaires peuvent être programmés en langage script directement interprétable par le robot. Les scripts sont organisés en modules qui utilisent des structures de données communes et sont ainsi indépendants les uns des autres. L'utilisateur peut intervenir à tous les niveaux de l'arbre hiérarchique des comportements. L'utilisateur peut également créer des interactions entre des comportements d'une branche de l'arbre et d'autres comportements appartenant à une autre branche de l'arbre. Il peut également intervenir au niveau des mouvements élémentaires du robot qui détermineront un comportement donné. En outre, le système est compatible de plusieurs environnements de développement (langages Python, URBI, notamment ; Windows XP, Mac OS, UNIX...).

L'invention sera mieux comprise et ses différentes caractéristiques et avantages ressortiront de la description qui suit de plusieurs exemples de réalisation et de ses figures annexées dont :
- La figure 1 est un schéma de l'architecture fonctionnelle d'édition et de programmation des comportements d'un robot dans un mode de réalisation de l'invention ;
- La figure 2 est une vue de l'écran principal du système d'édition et de programmation des comportements d'un robot dans un mode de réalisation de l'invention ;
- La figure 3 est une vue de l'écran qui permet à un utilisateur d'éditer les Couches de comportement et de mouvement d'un robot dans un mode de réalisation de l'invention ;
- La figure 4 est une vue d'un écran montrant des Boîtes de commande de comportements connectées pour éditer et programmer une Trame principale de comportements à exécuter par un robot dans un mode de réalisation de l'invention ;
- La figure 5 est un organigramme fonctionnel de l'architecture d'une Boîte de commande du système d'édition et de programmation des comportements d'un robot dans un mode de réalisation de l'invention;
- La figure 6 est une vue montrant différents types de connections entre des Boîtes de commande de comportements connectées pour éditer et programmer une Trame principale de comportements à exécuter par un robot dans un mode de réalisation de l'invention ;
- La figure 7 est une vue montrant un exemple de programmation par action directe sur une représentation graphique des moteurs d'un robot virtuel dans un mode de réalisation de l'invention ;
- Les figures 8a et 8b sont des vues de deux écrans illustrant un exemple de mouvement d'un robot impossible à exécuter dans le temps imparti,, dans un mode de réalisation de l'invention ;
- Les figures 9a, 9b et 9c sont des vues d'écrans qui illustrent un exemple complexe d'édition de comportements d'un robot dans un mode de réalisation de l'invention ;
- Les figures 10a, 10b et 10c sont des vues d'écrans qui illustrent un exemple d'édition d'un enchaînement de comportements d'un robot synchronisés avec un axe temporel de Trames ou Timeline dans un mode de réalisation de l'invention ;
- La figure 11 illustre un exemple de script permettant la programmation directe de l'exécution d'un comportement d'un robot dans un mode de réalisation de l'invention.

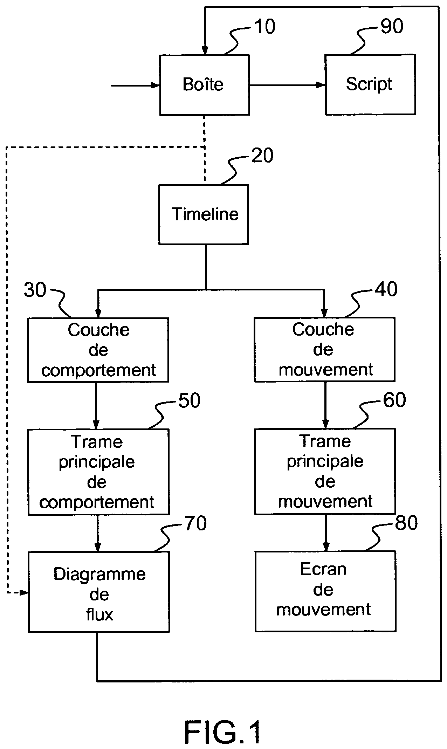

La figure 1 est un schéma de l'architecture fonctionnelle d'édition et de programmation des comportements d'un robot dans un mode de réalisation de l'invention.
Le robot commandé par le procédé et le système de l'invention peut être un robot humanoïde ayant une tête, un tronc et quatre membres, chacune des parties étant articulée, chaque articulation étant commandée par un ou plusieurs moteurs. L'invention permet à un utilisateur du système de commander un tel robot en créant des comportements simulés sur un robot virtuel et exécutés sur le robot réel relié au système par une liaison filaire ou sans fil.
Il s'agit de visualiser, de simuler et de faire exécuter des comportements (tels que la marche - tout droit, à droite ou à gauche de n pas ; un « hello » - mouvements d'un des bras au-dessus de la tête ; la parole, etc...) et des mouvements (de la tête, d'une partie de membre, d'un angle donné) sur l'écran d'un ordinateur programmé pour ce faire.
La figure illustre l'articulation des commandes déclenchées par des évènements avec leur dimension temporelle. Les commandes déclenchées par des évènements sont représentées dans la sémantique de l'invention par des Boxes ou « Boîtes » ou « Boîtes de commande » 10. Une Boîte est une structure de programmation arborescente qui peut comprendre un ou plusieurs des éléments ci-dessous qui sont définis ensuite:
- Une « Timeline » ou axe temporel de Trames 20;
- Un « Diagram » ou Diagramme de flux 70
- Un Script 90.
Les Boîtes de commande sont normalement reliées entre elles par des connections qui transmettent le plus souvent une information d'évènement d'une Boîte à l'autre, comme détaillé plus loin dans la description. Toute Boïte est reliée directement ou indirectement à une « Boîte racine » ou Root qui initialise le scénario de comportement/mouvement du robot.
Un axe temporel de Trames 20 représente la contrainte temporelle à laquelle sont soumis les comportements et les mouvements du robot définis dans la Boîte dans laquelle le dit Axe temporel de Trames est inséré. Dans la suite de la description et des revendications, nous utiliserons la dénomination anglo-saxonne de Timeline, communément admise avec le même sens dans le monde de la programmation. La Timeline réalise ainsi la synchronisation des comportements et mouvements de la Boîte. Elle est découpée en frames (Trames) auxquelles est associée une vitesse de déroulement définie en nombre de Trames par seconde ou Frames Per Second (FPS). Le FPS de chaque Timeline est paramétrable par l'utilisateur. Par défaut, le FPS peut être fixé à une valeur donnée, par exemple 15 FPS.
Une Timeline peut comprendre :
- Une ou plusieurs Behaviour Layers ou « Couches de comportement » 30, comprenant chacune une ou plusieurs Behaviour Key Frames ou « Trames principales de comportement » 50, qui peuvent comprendre elles-mêmes un ou plusieurs Diagrams ou « Diagrammes de flux » 70, qui sont en fait des ensembles de Boîtes qui peuvent également être rattachées directement à une Boîte de niveau supérieur, sans passer par une Couche de comportement ni une Timeline;
- Une ou plusieurs Motion Layers ou « Couches de mouvement » 40, comprenant chacune une ou plusieurs Motion Key Frames ou «Trames principales de mouvement » 60 qui peuvent comprendre un ou plusieurs Motion Screens ou « Ecrans de mouvement » 80.
Une Couche de comportement définit un ensemble de comportements du robot ou Trames principales de comportement. Plusieurs Couches de comportement peuvent être définies au sein d'une même Boîte. Elles seront alors programmées pour se dérouler de manière synchronisée par la Timeline de la Boîte.
Une Couche de comportement pourra comprendre un ou plusieurs Trames principales de comportement. Une Trame principale de comportement définit un comportement du robot, tel que la marche (« Walk »), la parole (« Say »), le jeu de musique (« Music »)... Un certain nombre de comportements sont pré-programmés dans le système de l'invention pour être directement insérés par l'utilisateur dans un simple « drag and drop » à partir d'une librairie comme détaillé plus loin dans la description. Chaque Trame principale de comportement est définie par un évènement déclencheur qui est le début de la Trame à laquelle elle est insérée dans la Timeline. La fin de la Trame principale de comportement n'est définie que dans la mesure où une autre Trame principale de comportement est insérée à sa suite, ou si un évènement de fin est défini.
Une Couche de mouvement définit un ensemble de mouvements du robot qui sont programmés par une ou plusieurs Trames principales de mouvement successives qui regroupent des mouvements des moteurs des articulations du robot. Ces mouvements à exécuter sont définis par les positions angulaires d'arrivée des dits moteurs qui peuvent être programmées par action sur des écrans de mouvement, lesdites actions étant détaillées plus loin dans la description. Toutes les Trames principales de mouvement d'une même Boîte sont synchronisées par la Timeline de la Boîte. Une Trame principale de mouvement est définie par une Trame d'arrivée. La Trame de départ est celle de fin de la Trame principale de mouvement précédente ou celle de l'évènement de début de la Boîte.
On désigne sous l'appellation commune de Trame principale d'action les tTrames principales de comportement et les Trames principales de mouvement.
Il est possible d'exécuter en parallèle plusieurs Trames principales d'action (de comportement ou de mouvement), à condition qu'elles soient rattachées à la même Timeline.
Un Diagramme de flux est un ensemble de Boîtes connectées entre elles, comme détaillé plus loin. Chacune des Boîtes peut à son tour comprendre d'autres Timeline auxquelles sont rattachées de nouvelles Couches de comportement ou de mouvement.
Un script est un programme directement exécutable par le robot. Une Boîte qui comprend un script ne comprend pas d'autre élément.

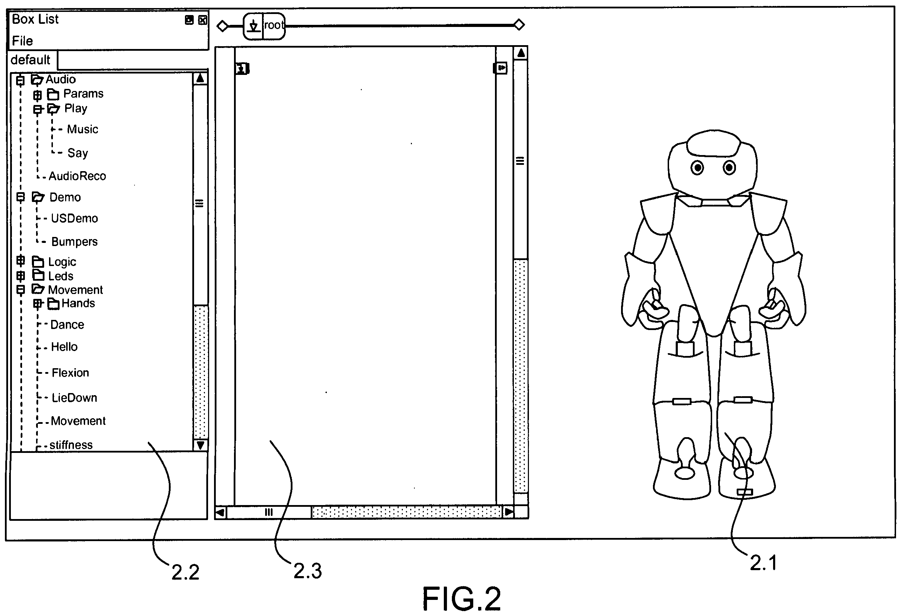

La figure 2 est une vue de l'écran principal du système d'édition et de programmation des comportements d'un robot dans un mode de réalisation de l'invention.
La partie de droite 2.1 comprend une image virtuelle du robot à commander qui va permettre de réaliser des simulations de l'exécution des commandes. Le robot peut être de tout type, mais l'invention sera particulièrement avantageuse dans le cas d'un robot humanoïde ou de forme animale, ayant une tête, un corps et des membres.
La partie de gauche 2.2. donne accès à une bibliothèque de comportements qui est stockée sur l'ordinateur. Ces comportements sont des composants réutilisables avec lesquels peuvent être définis des comportements élémentaires utilisés fréquemment comme la marche, la danse, la parole, l'allumage des yeux ou d'autres LEDs, etc...
La partie centrale 2.3. permet d'assembler des comportements prélevés dans la bibliothèque 2.2 pour les éditer et les assembler en séquences de comportements sous forme de Diagramme des flux, comme lindiqué de manière détaillée plus loin dans la description.

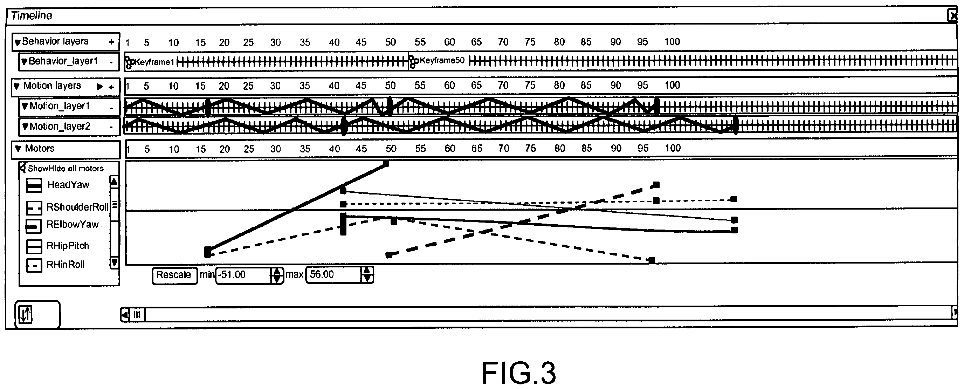

La figure 3 est une vue de l'écran qui permet à un utilisateur d'éditer les Couches de comportement et de mouvement d'un robot dans un mode de réalisation de l'invention
Comme on le voit dans les parties 3.1 (Couches de comportement) et 3.2. (Couches de mouvement), plusieurs Couches peuvent être définies dans le type comportement et dans le type mouvement et, dans chaque Couche, plusieurs Trames principales peuvent être créées.
Les Couches de type comportement seront décrites dans la suite de la description.
La création des Trames principales des Couches de type mouvement est explicitée plus loin dans la description. On explicite ici les modalités d'édition des Trames principales de mouvement. Il est possible de copier ou déplacer une séquence au sein d'une Couche de mouvement ou d'une Couche de mouvement à une autre. Dans ce deuxième cas, il se peut que le mouvement ne puisse être exécuté en raison de conflits de commandes données à un même moteur.
Il est possible de lisser les transitions entre séquences de mouvements en réalisant un interpolation de type linéaire ou exponentielle, par exemple. Il est également possible de dupliquer une séquence définie pour un membre supérieur ou inférieur dans une séquence applicable au membre symétrique où les mouvements sont eux-mêmes symétrisés.
Comme visualisé dans la partie 3.3 de la figure, dans une Couche de type mouvement, on peut également visualiser l'évolution des moteurs de chacune des parties du robot dans un système d'axes dont l'abscisse est la Timeline des Couches de comportement et de mouvement et l'ordonnée est l'angle de rotation de chacun des moteurs qui peut être positif ou négatif.. Dans un exemple de réalisation de l'invention, le robot peut comporter plusieurs moteurs. Les mouvements peuvent être modifiés en déplaçant les points d'arrêt d'un moteur en abscisse et/ou en ordonnée. Certains mouvements de moteur ne sont pas compatibles entre eux et ne pourront être exécutés.

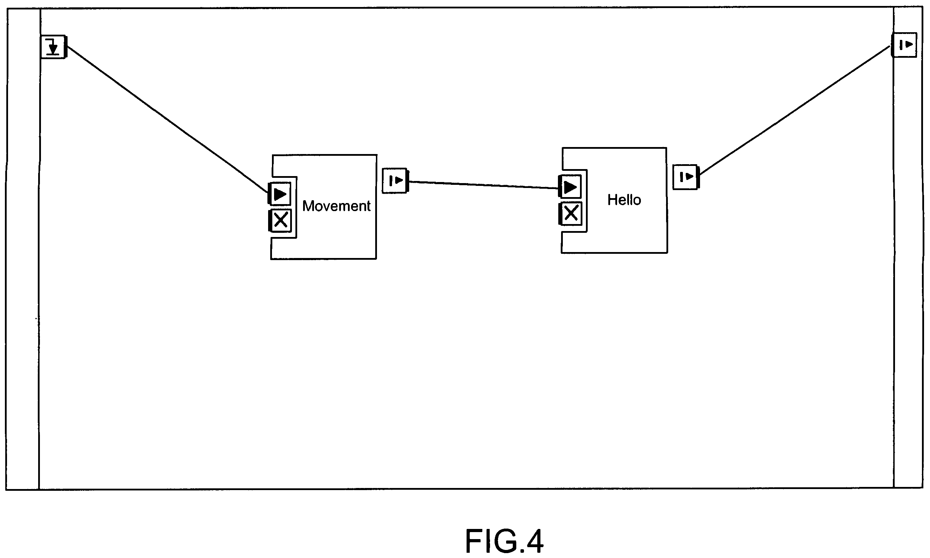

La figure 4 est une vue d'un écran montrant des Boîtes de commande de comportement connectées pour éditer et programmer une séquence de comportements à exécuter par un robot dans un mode de réalisation de l'invention.
La Boîte de commande de comportement est la brique de base d'un système d'édition et de commande d'un robot selon l'invention. Une Boîte de commande de comportement définit une ou plusieurs actions et comporte une ou plusieurs entrées et une ou plusieurs sorties. Dans l'exemple de la figure 4, l'entrée est l'évènement « Début de la séquence de comportement X » en haut et à gauche de l'écran 2.3. de la figure 2. Ce point est relié par un arc à une des entrées située à gauche de la 1^{ère} Boîte « Movement ». La sortie de la dite Boîte est connectée à une des entrées de la 2^{ème} Boîte « Hello ». La sortie de cette 2^{éme} Boîte est connectée à l'évènement « Fin de la séquence de comportement X » en haut et à droite de l'écran. Les deux Boîtes ont été créées dans l'écran par copie des éléments correspondants de la bibliothèque 2.2 de la figure 2 (opération drap and drop). Les connections ont été créées de manière graphique en reliant les points d'entrée/sorties à l'aide de la souris.
Comme indiqué en commentaire de la figure 1, dans un mode de réalisation de l'invention, les Boîtes peuvent être de trois types :
- Boîte de script, comprenant une suite d'instructions en langage informatique ; les langages utilisés peuvent être des langages spécialisés dans la commande de robots tels que URBI™ ;
- Boîte Diagramme de flux, comprenant plusieurs Boîtes, dont par exemple une Boîte permettant à l'utilisateur de définir un paramètre utilisé par une autre Boîte, tel que, par exemple, la distance de marche ;
- Boîte comprenant une Timeline avec une ou plusieurs Couches de mouvement et/ou une ou plusieurs Couches de comportement.

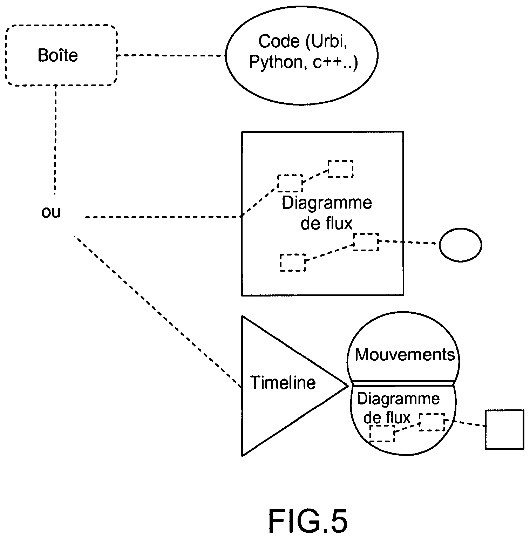

La figure 5 est un organigramme fonctionnel de l'architecture d'une Boîte du système d'édition et de programmation des comportements d'un robot dans un mode de réalisation de l'invention.
L'organigramme de la figure récapitule les différentes possibilités offertes par les Boîtes : scripts, Diagrammes de flux, Timeline avec d'une part une Trame principale de comportement et d'autre part un autre Diagramme de flux composé de comportements.

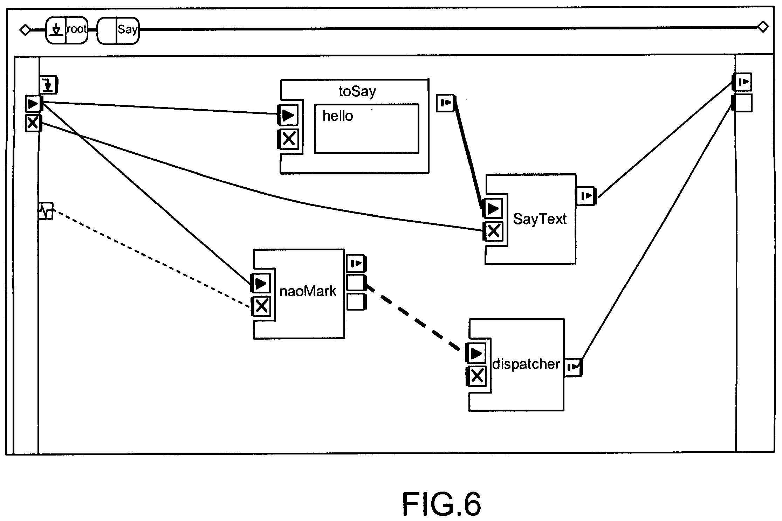

La figure 6 est une vue montrant différents types de liens entre des Boîtes de comportement connectées pour éditer et programmer une Trame principale de comportements à exécuter par un robot dans un mode de réalisation de l'invention.
Plusieurs types d'entrées sont possibles :
- OnStart : entrée de départ qui lance l'exécution d'une Boîte ;
- OnStop : entrée, représentée par une croix, qui stoppe l'exécution de la Boîte lorsqu'elle est activée ; l'arrêt n'intervient cependant qu'à la fin d'une action dont l'interruption en cours d'exécution mettrait le robot en position instable (cas d'une Boîte « Walk » ou « Marche », par exemple ;
- OnStopped : sortie qui est activée quand l'exécution de la Boîte est terminée ; cette sortie peut être liée aux entrées d'autres Boîtes ; ces entrées seront activées quand les comportements des Boîtes précédentes qui sont liées à cette entrée auront été complètement exécutés ;
- OnLoad : entrée cachée dans la structure d'une Boîte ; cette entrée apparaît quand on ouvre une Boîte à plusieurs niveaux ; elle est activée quand une Boîte à plusieurs niveaux est complètement chargée en mémoire, ledit chargement n'intervenant qu'à l'activation de la Boîte de niveau supérieur ;
- Input connected to ALMemory : cette entrée est activée chaque fois que la valeur calculée dans ALMemory change ;
   ∘ La mémoire ALMemory est une base de donnée interne au robot ; c'est une mémoire à court terme : on y insère la dernière valeur d'une variable donnée (avec possibilité d'avoir un court historique, i.e. quelques valeurs précédentes de la variable), et la mémoire peut se charger de notifier les modules intéressés par le changement d'une ou plusieurs variables. Elle contient par exemple les informations de tous les capteurs, mises à jour toutes les 20ms : valeurs angulaires de moteurs, courant, températures... En cours d'exécution sur un robot, cette mémoire peut contenir plus de 4000 variables. Tous les modules tournant sur le robot ou s'y étant connecté peuvent communiquer avec ALMemory, pour insérer des valeurs qu'ils désirent publier, ou pour s'inscrire sur des variables qui les intéressent et réagir a leur changement (ex : réagir a la valeur de la batterie, pour que le robot cherche son chargeur quand le niveau de batterie est en dessous d'un certain seuil). ;
- Event Input : quand cette entrée est activée, le comportement en cours d'exécution dans la Boîte est modifié ;
   ∘ A titre d'exemple illustratif, nous prenons le cas d'une Boîte "Timer" stimulant une de ses sorties à une cadence régulière: toutes les n secondes : une entrée de type "event input" attend un paramètre de type "Number", et change le cadencement de la boite si elle reçoit un signal sur cette entrée ; ainsi, si un signal de valeur '3' arrive sur son entrée, la sortie ne sera ainsi stimulée que toutes les 3 secondes. ;
- Punctual Output : cette sortie peut être activée à n'importe quel moment pendant l'exécution d'un comportement dans la Boîte ;
   ∘ A titre d'exemple illustratif, nous prenons le cas d'une boïte de détection de visages ; cette Boîte a une sortie ponctuelle de type "Number" ; quand la Boîte est en cours d'exécution, elle stimule cette sortie a chaque fois que le robot identifie dans son champ visuel un nombre de visages différent de l'instant précédent ; s'il n'y avait personne, et si le robot voit un visage, il stimule sa sortie avec l'information '1' ; si un 2e visage arrive, il envoie l'information '2', et si les 2 visages disparaissent un peu plus tard, il envoie '0' ; on récupère ainsi l'évènement "visage(s) identifiés", avec le nombre de visage identifiés.
Les Boîtes et évènements sont connectés entre eux par des liens, comme représenté sur la figure 6. Un lien transporte un signal d'évènement entre entrées et sorties. Il peut y avoir plusieurs types de signaux d'évènements :
- Un signal d'activation, sans autre information ;
- Un signal porteur d'un ou plusieurs nombres (par exemple un nombre de pas ou une distance) ;
- Un signal porteur d'une ou plusieurs chaînes de caractères (par exemple un texte qui doit être passé au module de synthèse de la parole du robot) ;
- Un signal composite, qui peut comprendre plusieurs signaux, chacun d'un des types précédents.
Avantageusement, ces liens sont représentés de manière graphique de manières différentes, par des couleurs ou des traits de textures différentes. Certaines Boîtes n'admettent que des entrées de certains types définis et pas d'entrées d'autres types.
Il est possible d'établir des connections entre deux Boîtes appartenant à des Trames principales de comportement différentes mais ayant une intersection sur une même Timeline. Pour cela, l'utilisateur du système de l'invention peut se placer à un instant sur une Timeline et éditer toutes les Trames principales de comportement actives au dit instant. Ainsi, si une première Trame principale est chargée dans la Timeline et qu'une deuxième Trame principale apparaît avec ses Boîtes et ses connections, l'utilisateur peut déplacer ou modifier les Boîtes et les connections entre elles et modifier ainsi de manière dynamique les comportements qui seront exécutés par le robot..

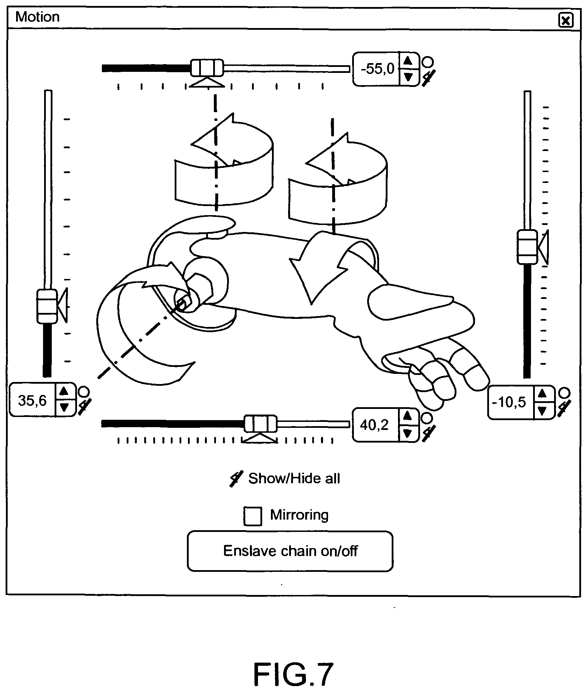

La figure 7 est une vue montrant un exemple de programmation par action directe sur une représentation graphique des moteurs d'un robot virtuel dans un mode de réalisation de l'invention.
La figure 7 représente le bras gauche d'un robot. Dans cet exemple, le bras comporte une articulation bras-épaule à deux degrés de liberté orthogonaux actionnés par deux moteurs et une articulation main-bras, également à deux degrés de liberté. Les angles de rotation des 4 moteurs des articulations peuvent être directement commandés en faisant glisser avec la souris les curseurs correspondant à chacun des moteurs. Les valeurs des angles sont affichées pour chaque moteur. Dans un mode standard de réalisation de l'invention, la réalisation de la commande par le moteur de l'articulation du robot virtuel peut prendre de l'ordre d'une seconde. Dans le cas où le mouvement n'est pas réalisé dans ce temps, cela peut vouloir dire que le mouvement n'est pas réalisable, notamment parce qu'un obstacle existe qui s'oppose à la réalisation du mouvement.
Un indicateur de statut montre si le mouvement commandé a pu être enregistré. Si l'indicateur de statut est dans une position « Non enregistré », cela peut vouloir dire que le mouvement n'est pas exécutable, notamment parce qu'un moteur sollicité dans une Couche de mouvement dépendant d'une Timeline ne peut pas l'être dans une autre Couche de mouvement dépendant de la même Timeline.
Il est possible de visualiser les lignes temps/angles de chacun des moteurs montrées sur la figure 3, individuellement ou pour une partie donnée. Comme déjà indiqué, il est également possible dans ce mode de commande de transférer les mouvements programmés pour un membre sur le membre symétrique. Dans ce cas, les mouvements des moteurs sont symétrisés.
Il est possible de programmer sur cet écran un mode maître-esclave dans lequel un robot physique connecté au système d'édition et de programmation de l'invention est commandé par le système et le robot virtuel est asservi au robot physique.

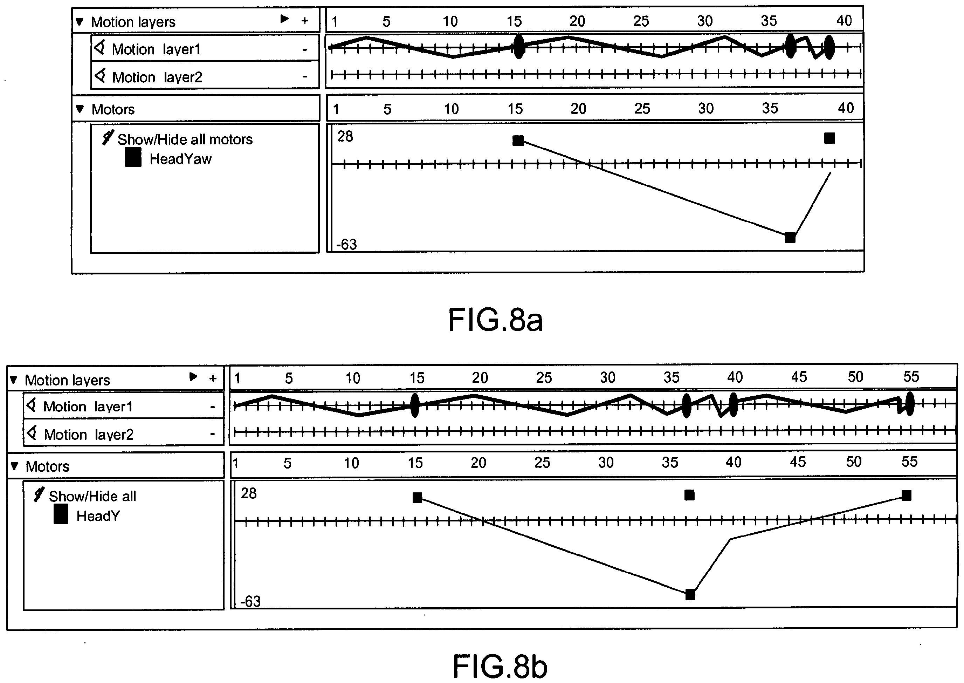

Les figures 8a et 8b sont des vues de deux écrans illustrant respectivement un exemple de mouvement d'un robot impossible à exécuter tel que commandé et un exemple d'ajustement du mouvement pour le rendre exécutable, dans un mode de réalisation de l'invention.
Sur la figure 8a, on voit que la ligne qui représente le mouvement commandé ne rejoint pas la position de la séquence de mouvement suivante qu'il devrait normalement rejoindre (matérialisée par un petit carré). Entre la position de départ et la position d'arrivée, il n'y a que 5 pas de séquence de mouvement. Compte tenu de la limite de vitesse fixée au moteur (qui peut varier par exemple entre 4 et 8 rad/s selon les moteurs), de la vitesse de défilement des Trames (30 FPS dans ce cas), et de l'amplitude angulaire à parcourir par le moteur (de -52 à +37 degrés, dans l'exemple de la figure), la commande ne peut être exécutée.
Sur la figure 8b, on voit que le moteur est passé à l'exécution de la commande suivante dès que la Trame où est positionnée la Trame principale de mouvement non exécutable a été atteinte.

Les conditions d'impossibilité sont, comme on le voit dépendantes du nombre de FPS choisi par l'utilisateur et des vitesses limites des moteurs, étant observé que ce dernier paramètre n'admet que peu de variations et est dépendant des caractéristiques des moteurs.

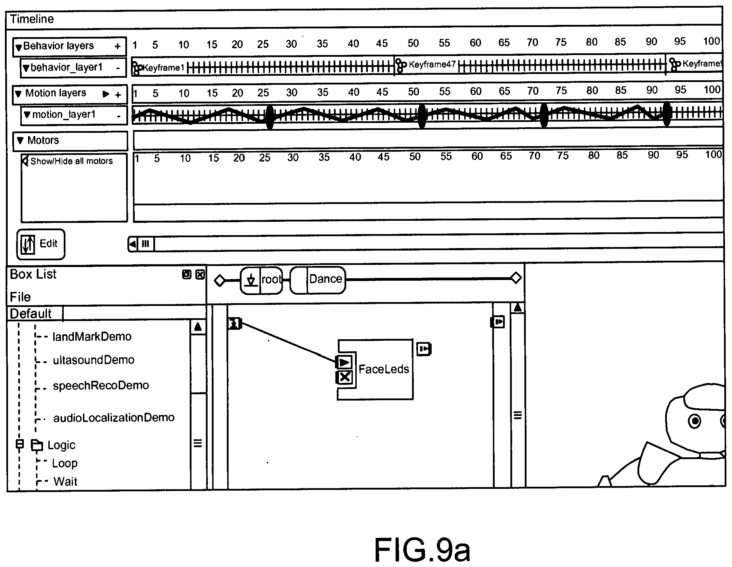

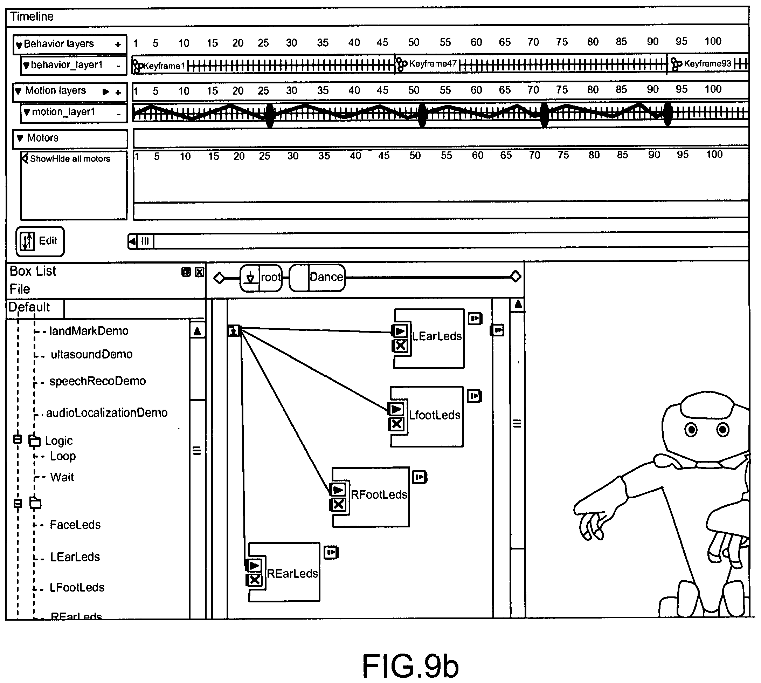

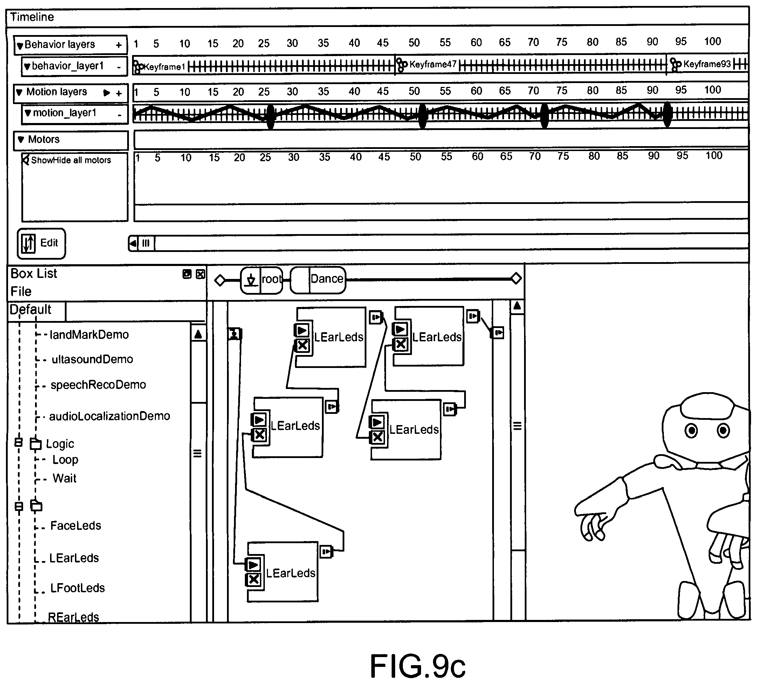

Les figures 9a, 9b et 9c sont des vues d'écrans qui illustrent un exemple complexe d'édition de comportements d'un robot dans un mode de réalisation de l'invention.
La figure 9a illustre un cas où une 1^{ère} séquence de comportement (keyframe 1 sur behavior_layer1) est générée par la création dans un Couche de type comportement par ajout dans la fenêtre d'édition des Boîtes d'une 1^{ère} Boîte « Dance », la dite 1^{ère} séquence étant synchronisée avec la Timeline dans la motion_layer1. Une 2^{éme} Boîte « FaceLeds » (LEDs du visage) est ajoutée dans la fenêtre d'édition des Boîtes dans la 1^{ère} séquence keyframe 1.
Les figures 9b et 9c sont deux variantes de la figure 9A dans lesquelles :
- Sur la figure 9b, d'autres LEDs sont substituées à la FaceLed et sont toutes reliées à l'entrée de la Boîte, ce qui veut dire que les comportements correspondants (allumage des LEDs) s'exécuteront en parallèle ;
- Sur la figure 9c, d'autres LEDs sont ajoutées en séquence avant la FaceLed, ce qui veut dire que leur allumage s'effectuera successivement avant l'allumage de la FaceLED.

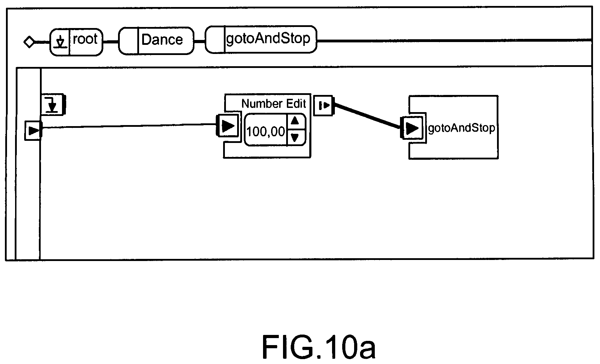

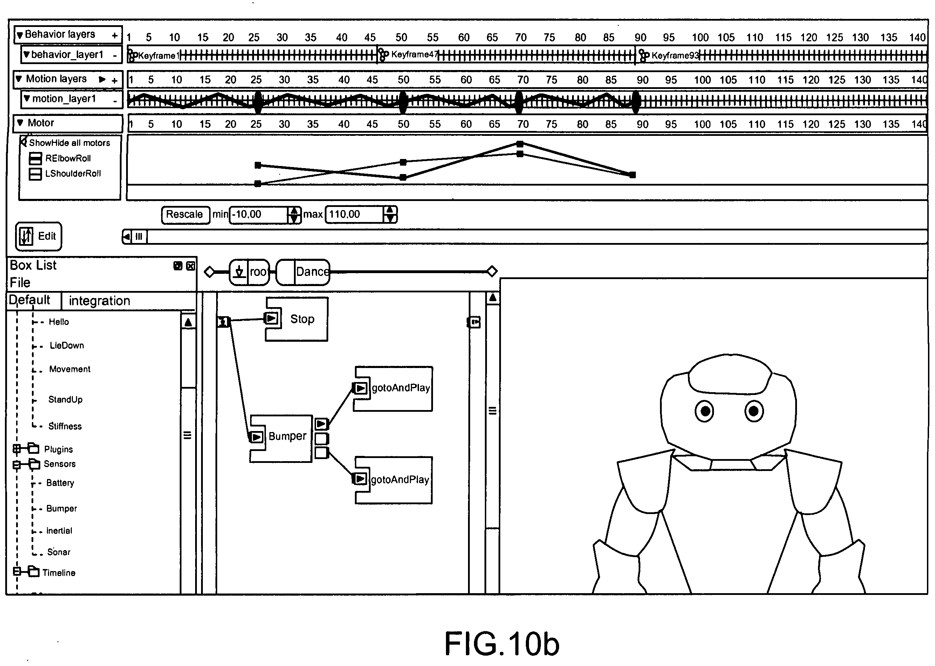

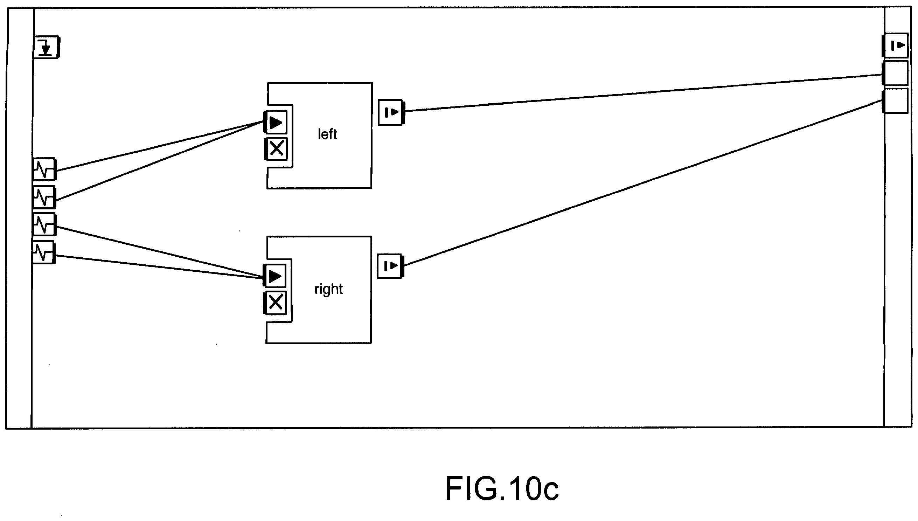

Les figures 10a, 10b et 10c sont des vues d'écrans qui illustrent un exemple d'édition d'un enchaînement de comportements d'un robot synchronisés avec la ligne des temps dans un mode de réalisation de l'invention.
La figure 10a montre une Boîte « GotoAndStop » paramétrée par un index de Trame de la Timeline (100 dans l'exemple de la figure). Lorsque cette Boîte est activée, l'exécution saute au pas désigné par le paramètre de la Boîte et l'exécution du comportement en cours est stoppée.
Comme indiqué sur la figure 10b, il existe également une Boîte de comportement « GotoAndPlay » qui se distingue de la Boîte de comportement « GotoAndStop » en ce que, au lieu d'arrêter le déroulement du temps dans la Couche de comportement concernée, elle le laisse se dérouler à partir du pas spécifié. Dans le cas illustré, deux Boîtes « GotoAndPlay » et « GotoAndStop » sont connectées aux sorties d'une Boîte « Bumper » qui comprend les capteurs de choc respectivement du pied gauche et du pied droit du robot (dans un mode de réalisation, le robot a deux capteurs de choc sur chaque pied).
La figure 10c montre une vue interne de la Boîte Bumpers où sont illustrés les deux capteurs « left » (capteurs du pied gauche) et « right » (capteurs du pied droit).
En revenant sur la figure 10b, on voit que
- si au moins un des capteurs du pied gauche est activé (choc du pied gauche sur un obstacle détecté par le capteur), le comportement en cours (Danse dans l'exemple de la figure) est arrêté mais la Timeline de la Couche de comportement dans laquelle est insérée le comportement Marche continue à se dérouler ;
- si au moins un des capteurs du pied droit est activé (choc du pied droit sur un obstacle détecté par le capteur), le comportement en cours (Marche dans l'exemple de la figure) est arrêté et la Timeline de la Couche de comportement dans laquelle est insérée le comportement Marche est mise en pause.

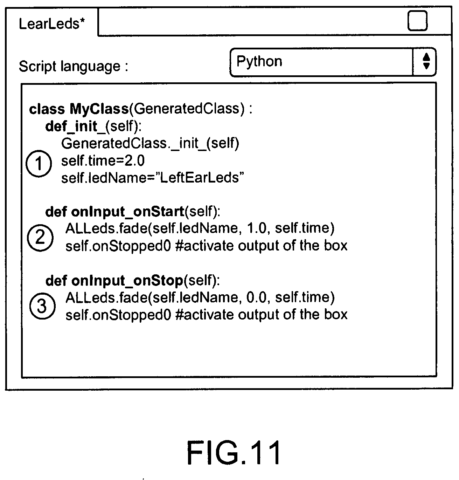

La figure 11 illustre un exemple de script permettant la programmation directe de l'exécution d'un comportement d'un robot dans un mode de réalisation de l'invention.
L'exemple de la figure est un script d'allumage des LEDs de l'oreille gauche du robot (LEarLeds). Un script est un module, ici écrit en langage Python, qui est un langage interprété. La création d'une Boîte de script se fait en 3 étapes :
- instanciation de la Boîte ;
- enregistrement de la Boîte comme un module qui peut être appelé par les autres Boîtes qui lui sont liées ;
- initialisation de la Boîte.
L'utilisateur n'intervient pas dans les 2 premières étapes. Il contrôle la 3^{ème}. Comme il est classique en langage script, chaque module est composé de méthodes qui sont utilisables dans une ou plusieurs classes. Des attributs (ou variables) sont définis pour un ou plusieurs modules. Les scripts sont modifiables en tout ou partie par l'utilisateur. Les modules du système sont directement accessibles. Certains modules gèrent les fonctions de base du robot (ALMemory pour sa mémoire, ALMotion pour les fonctions de mouvement, ALLeds pour les LEDs, etc...). Le module ALMotion propose une interface (au sens interface de programmation) pour déplacer le robot. On y retrouve des méthodes très haut niveau, comme "marche de 1 m droit devant", ou plus bas niveau : "fait bouger l'articulation 'HeadPitch' - « Tangage de la tête » - jusqu'a 30 degrés en 1.5 secondes, en utilisant une interpolation pour lisser le mouvement". Le module ALLeds donne accès à toutes les LEDs du robot ; on peut ainsi jouer sur l'intensité, la couleur (quand la LED peut changer de couleur) de chaque LED ou d'un groupe de LEDs (toutes celles de l'oeil gauche d'un coup par exemple). Il y a aussi des méthodes plus haut niveau, permettant de faire tourner les LEDs d'un groupe (comme les LEDs des oreilles par exemple).

Le système d'édition et de commande des mouvements d'un robot mobile de l'invention peut être implanté sur un ordinateur personnel du commerce disposant d'un système d'exploitation classique (Windows, Mac, UNIX). Le ou les langages scripts utilisés doivent être implantés sur l'ordinateur. Si le système est utilisé pour commander directement un robot physique, une liaison soit radio de type WiFi soit filaire est nécessaire. Ces liaisons peuvent également être utilisées pour récupérer sur un réseau local ou distant des scripts de comportements échangés avec d'autres utilisateurs. Le robot virtuel du système d'édition et de commandes est l'image des robots physiques à commander par le système qui devra être en mesure d'interpréter et d'exécuter les commandes reçues du système.
Un même système d'édition et de commande selon l'invention peut commander plusieurs robots. Certains de ces robots peuvent avoir des apparences physiques différentes - humanoïde, animal... - et même des structures différentes (nombre de degrés de liberté différents ; robots simples n'exécutant que des mouvements et autres robots pouvant exécuter mouvements et comportements) Les robots aptes à être commandés par le système de l'invention doivent cependant disposer des interfaces de communication nécessaires et de modules logiciel aptes à exécuter les scripts des Boîtes du système d'édition et de commande selon l'invention. Les exemples décrits ci-dessus sont donnés à titre d'illustration de modes de réalisation de l'invention. Ils ne limitent en aucune manière le champ de l'invention qui est défini par les revendications qui suivent.

## Revendications

1. Procédé d'édition d'un programme de commande d' une pluralité d'actions d'un robot mobile appartenant au groupe des actions de type comportement et des actions de type mouvement, ladite pluralité d'actions appartenant à au moins une Trame principale d'actions (50, 60), ledit procédé comprenant :
- une étape de connexion de la dite au moins une Trame principale d'actions à au moins un évènement choisi dans le groupe des évènements antécédents et des évènements successeurs, ladite au moins une Trame principale d'actions appartenant à une Boîte de commande (10) ; et
- une étape de définition d'une Timeline (20) de la Boîte de commande applicable à ladite au moins une Trame principale d'actions, ladite Timeline représentant une contrainte temporelle à laquelle sont soumises les actions du robot définies dans la Boîte de commande dans laquelle ladite Timeline est insérée et réalisant une synchronisation des actions de la Boîte de commande ;
ledit procédé étant **caractérisé en ce qu'**il comprend en outre une étape de
prise en compte d'un paramètre de vitesse de déroulement de la Timeline défini par un nombre de trames par unité de temps, ledit paramètre étant soit défini par un utilisateur soit fixé à une valeur donnée.

2. Procédé d'édition selon la revendication 1, **caractérisé en ce que** la dite Trame principale d'actions appartient à au moins une Couche d'action (30, 40), ladite Couche d'action appartenant à ladite Boîte de commande.

3. Procédé d'édition selon l'une des revendications 1 à 2, **caractérisé en ce que** la dite Trame principale d'actions est de type comportement et est décomposée en comportements élémentaires, chacun défini par au moins une Boîte de commande, les dites Boîtes de commande définissant lesdits comportements élémentaires et étant connectées entre elles au sein d'au moins un Diagramme de flux (70).

4. Procédé d'édition selon la revendication 3, **caractérisé en ce que** au moins deux Trames principales de comportement se déroulent selon la même Timeline et comprennent chacune au moins une Boîte de commande de la première Trame principale de comportement connectée à au moins une Boîte de commande de la deuxième Trame principale de comportement.

5. Procédé d'édition selon la revendication 3, **caractérisé en ce qu'**au moins une desdites Boîtes de commande comprend au moins une seconde Boîte de commande.

6. Procédé d'édition selon la revendication 3, **caractérisé en ce qu'**au moins une des Boîtes de commande comprend un script (90) directement interprétable par le robot, ledit script étant modifiable directement par l'utilisateur.

7. Procédé d'édition selon la revendication 6, **caractérisé en ce que** au moins une sortie d'au moins une première Boîte de commande est reliée à au moins une entrée d'au moins une deuxième Boîte de commande par un connecteur transportant un signal représentatif d'un évènement.

8. Procédé d'édition selon l'une des revendications 1 à 7, **caractérisé en ce que** le robot mobile comprend une tête et jusqu'à quatre membres.

9. Procédé d'édition selon la revendication 8, **caractérisé en ce que** l'une desdites actions est un mouvement d'au moins une partie du robot choisie dans le groupe comprenant au moins la tête et jusqu'à quatre membres et défini par une rotation d'au moins un moteur.

10. Procédé d'édition selon la revendication 9, **caractérisé en ce que** la au moins une rotation du au moins un moteur est définie par une action de l'utilisateur sur un curseur positionné sur un écran de mouvement (80) représentant la partie du robot à mettre en mouvement.

11. Programme d'ordinateur comprenant des instructions de code de programme configuré pour exécuter le procédé selon l'une des revendications 1 à 10 lorsque le programme est exécuté sur un ordinateur, ledit programme étant adapté pour l'édition dans un langage interprétable ou compilable d' une pluralité d'actions d'un robot mobile appartenant au groupe des comportements et des mouvements.

12. Programme d'ordinateur comprenant des instructions de code de programme, lesdites instructions exécutables par au moins un ordinateur pour simuler une pluralité d'actions d'un robot mobile ou par un robot mobile pour commander une pluralité d'actions dudit robot mobile, lesdites actions appartenant au groupe des actions de type comportement et des actions de type mouvement, lesdites actions appartenant à au moins une Trame principale d'actions (50, 60), ledit programme d'ordinateur généré par un programme d'ordinateur en langage interprétable ou compilable selon la revendication 11

13. Robot mobile configuré pour exécuter un programme d'ordinateur selon la revendication 12.

## Patentansprüche

1. Verfahren zum Bearbeiten eines Steuerprogramms für eine Mehrzahl von Aktionen eines beweglichen Roboters, die zur Gruppe von Aktionen des Verhaltenstyps und von Aktionen des Bewegungstyps gehören, wobei die Mehrzahl von Aktionen zu wenigstens einem Aktionshauptframe (50, 60) gehört, wobei das Verfahren Folgendes beinhaltet:
- einen Schritt des Verbindens des wenigstens einen Aktionshauptframe mit wenigstens einem Event, ausgewählt aus der Gruppe von vorherigen Events und von nachfolgenden Events, wobei der wenigstens eine Aktionshauptframe zu einer Steuerbox (10) gehört; und
- einen Schritt des Definierens einer Timeline (20) der Steuerbox, anwendbar auf den wenigstens einen Aktionshauptframe, wobei die Timeline eine zeitliche Beschränkung repräsentiert, der die Aktionen des Roboters unterliegen, definiert in der Steuerbox, in der sich die Timeline befindet und die eine Synchronisation der Aktionen der Steuerbox realisiert;
wobei das Verfahren **dadurch gekennzeichnet ist, dass** es ferner einen Schritt des Berücksichtigens eines Ablaufgeschwindigkeitsparameters der Timeline beinhaltet, definiert durch eine Anzahl von Frames pro Zeiteinheit, wobei der Parameter entweder von einem Benutzer definiert oder auf einen gegebenen Wert festgelegt ist.

2. Bearbeitungsverfahren nach Anspruch 1, **dadurch gekennzeichnet, dass** der Aktionshauptframe zu wenigstens einer Aktionsschicht (30, 40) gehört, wobei die Aktionsschicht zu der Steuerbox gehört.

3. Bearbeitungsverfahren nach einem der Ansprüche 1 bis 2, **dadurch gekennzeichnet, dass** der Aktionshauptframe vom Verhaltenstyp ist und in elementare Verhaltenselemente zerlegt wird, die jeweils von wenigstens einer Steuerbox definiert werden, wobei die Steuerbox die elementaren Verhaltenselemente definiert und untereinander innerhalb von wenigstens einem Flussdiagramm (70) verbunden sind.

4. Bearbeitungsverfahren nach Anspruch 3, **dadurch gekennzeichnet, dass** wenigstens zwei Verhaltenshauptframes über dieselbe Timeline ablaufen und jeweils wenigstens eine Steuerbox des ersten Verhaltenshauptframe umfassen, verbunden mit wenigstens einer Steuerbox des zweiten Verhaltenshauptframe.

5. Bearbeitungsverfahren nach Anspruch 3, **dadurch gekennzeichnet, dass** wenigstens eine der Steuerboxen wenigstens eine zweite Steuerbox umfasst.

6. Bearbeitungsverfahren nach Anspruch 3, **dadurch gekennzeichnet, dass** wenigstens eine Steuerbox ein Skript (90) umfasst, das direkt vom Roboter interpretiert werden kann, wobei das Skript direkt vom Benutzer modifiziert werden kann.

7. Bearbeitungsverfahren nach Anspruch 6, **dadurch gekennzeichnet, dass** wenigstens ein Ausgang von wenigstens einer ersten Steuerbox mit wenigstens einem Eingang von wenigstens einer zweiten Steuerbox durch einen Verbinder verbunden ist, der ein ein Event repräsentiertes Signal transportiert.

8. Bearbeitungsverfahren nach einem der Ansprüche 1 bis 7, **dadurch gekennzeichnet, dass** der bewegliche Roboter einen Kopf und bis zu vier Gliedmaßen umfasst.

9. Bearbeitungsverfahren nach Anspruch 8, **dadurch gekennzeichnet, dass** eine der Aktionen eine Bewegung von wenigstens einem Teil des Roboters ist, ausgewählt aus einer Gruppe, die wenigstens den Kopf und bis zu vier Gliedmaßen umfasst, und definiert durch eine Rotation von wenigstens einem Motor.

10. Bearbeitungsverfahren nach Anspruch 9, **dadurch gekennzeichnet, dass** die wenigstens eine Rotation von wenigstens einem Motor durch eine Aktion des Benutzers auf einem Cursor definiert wird, der auf einem Bewegungsbildschirm (80) positioniert ist, der den in Bewegung zu versetzenden Teil des Roboters repräsentiert.

11. Computerprogramm, das Programmcodebefehle umfasst, konfiguriert zum Ausführen des Programms nach einem der Ansprüche 1 bis 10, wenn das Programm auf einem Computer abgearbeitet wird, wobei das Programm zum Bearbeiten in einer Sprache ausgelegt ist, die interpretiert oder von einer Mehrzahl von Aktionen eines beweglichen Roboters kompiliert werden kann, der zur Verhaltens- oder Bewegungsgruppe gehört.

12. Computerprogramm, das Programmcodebefehle umfasst, wobei die Befehle von wenigstens einem Computer ausgeführt werden können, um eine Mehrzahl von Aktionen eines beweglichen Roboters zu simulieren, oder von einem beweglichen Roboter zum Steuern einer Mehrzahl von Aktionen des beweglichen Roboters, wobei die Aktionen zur Gruppe der Aktionen des Verhaltenstyps und der Aktionen des Bewegungstyps gehören, wobei die Aktionen zu wenigstens einem Aktionshauptframe (50, 60) gehören, wobei das Computerprogramm von einem Computerprogramm in einer interpretierbaren oder kompilierbaren Sprache nach Anspruch 11 erzeugt wird.

13. Beweglicher Roboter, konfiguriert zum Ausführen eines Computerprogramms nach Anspruch 12.

## Claims

1. A method for editing a programme for controlling a plurality of actions of a mobile robot belonging to the group of actions of a behaviour type and actions of a motion type, said plurality of actions belonging to at least one Main action frame (50, 60), said method comprising:
- a step of connecting said at least one Main action frame to at least one event chosen from the group of preceding events and succeeding events, said at least one Main action frame belonging to a Control box (10); and
- a step of defining a Timeline (20) of the Control box applicable to said at least one Main action frame, said Timeline representing a time constraint to which are subjected the actions of the robot defined in the Control box into which said Timeline is inserted, and synchronising the actions of the Control box;
said method being **characterised in that** it further comprises a step of taking into account a speed parameter of progress of the Timeline defined by a number of frames per unit of time, said parameter being either defined by a user or being set at a given value.

2. The editing method according to claim 1, **characterised in that** said Main action frame belongs to at least one Action layer (30, 40), said Action layer belonging to said Control box.

3. The editing method according to either of claims 1 to 2, **characterised in that** said Main action frame is of behaviour type and is broken down into elementary behaviours, each defined by at least one Control box, said Control boxes defining said elementary behaviours and being interconnected within at least one Flow diagram (70).

4. The editing method according to claim 3, **characterised in that** at least two Main behaviour frames proceed according to the same Timeline and each comprise at least one Control box for the first Main behaviour frame connected to the at least one Control box of the second Main behaviour frame.

5. The editing method according to claim 3, **characterised in that** at least one of said Control boxes comprises at least one second Control box.

6. The editing method according to claim 3, **characterised in that** at least one of the Control boxes comprises a script (90) that can be interpreted directly by the robot, said script being directly modifiable by the user.

7. The editing method according to claim 6, **characterised in that** at least one output of at least one first Control box is connected to at least one input of at least one second Control box by a connector conveying a signal representative of an event.

8. The editing method according to any of claims 1 to 7, **characterised in that** the mobile robot comprises a head and up to four limbs.

9. The editing method according to claim 8, **characterised in that** one of said actions is a motion of at least one part of the robot chosen from the group comprising at least the head and up to four limbs and defined by a rotation of at least one motor.

10. The editing method according to claim 9, **characterised in that** the at least one rotation of the at least one motor is defined by an action of the user on a cursor positioned on a motion screen (80) representing the part of the robot to be set in motion.

11. A computer programme comprising programme code instructions configured to execute the method according to any of claims 1 to 10 when the programme is executed on a computer, said programme being adapted to edit in a language that can be interpreted or compiled by a plurality of actions of a mobile robot belonging to the group of behaviours and motions.

12. A computer programme comprising programme code instructions, said instructions being able to be executed by at least one computer in order to simulate a plurality of actions of a mobile robot or by a mobile robot in order to control a plurality of actions of said mobile robot, said actions belonging to the group of actions of a behaviour type and actions of a motion type, said actions belonging to the at least one Main action frame (50, 60), said computer programme being generated by a computer programme in a language that can be interpreted or compiled according to claim 11.

13. A mobile robot configured to execute a computer programme according to claim 12.
